# EUROPÄISCHE PATENTSCHRIFT

(11) **EP 3 527 044 B1**
(45) Veröffentlichungstag und Bekanntmachung des Hinweises auf die Patenterteilung: **11.09.2024**
(21) Anmeldenummer: 17784627.6
(22) Anmeldetag: 12.10.2017
(51) Int. Cl.: H05B 33/10, F21S 4/22, F21Y 115/10

(54) **LEUCHTDIODENSTREIFEN, VERFAHREN ZUM HERSTELLEN EINES LEUCHTDIODENBANDES UND LEUCHTDIODENBAND**
LED STRIP, METHOD FOR PRODUCING AN LED TAPE, AND LED TAPE
RUBAN DE DIODES ÉLECTROLUMINESCENTES, PROCÉDÉ DE FABRICATION D'UNE BANDE DE DIODES ÉLECTROLUMINESCENTES ET BANDE DE DIODES ÉLECTROLUMINESCENTES

(30) Priorität: 12.10.2016 DE 102016119452; 05.12.2016 DE 102016123471; 09.01.2017 DE 102017000125; 23.03.2017 DE 102017106291; 19.05.2017 DE 102017110987
(43) Veröffentlichungstag der Anmeldung: 21.08.2019
(73) Patentinhaber: Kager, Gerhard, 4210 Gallneukirchen (AT)
(72) Erfinder: Kager, Gerhard, 4210 Gallneukirchen (AT)
(74) Vertreter: Söllner, Udo
(86) Internationale Anmeldenummer: PCT/EP2017/076084
(87) Internationale Veröffentlichungsnummer: WO 2018/069453

(56) Entgegenhaltungen:
- WO-A1-2014/036629
- DE-A1- 102009 023 052
- DE-A1- 102014 221 721
- US-B2- 9 275 980

## Beschreibung

Leuchtdiodenbänder (im Folgenden LED-Bänder), insbesondere LED-Bänder, bei denen LED-Chips in Chip-on-board (COB)-Technologie auf flexiblen Leiterplatten (auch Flex-PCBs genannt) montiert sind, müssen eine Verkapselung aufweisen, die die LED-Chips inklusive Leiterplatte versiegelt und damit vor mechanischer Beschädigung, Staub, Wasser und anderen Umwelteinflüssen schützt. Die Herstellung einer solchen Verkapselung erfolgt in der Regel über Polyurethan(PU)- oder Silikon-Verguss. Zu LED-Chips zählen vorliegend sowohl mit einem Gehäuse, beispielsweise mit einer leadframebasierten Kunststoffumhüllung versehene lichtemittierende Halbleiterkörper (beispielsweise PLCC2 SMD LEDs, PLCC4 SMD LEDs oder PLCC6 SMD LEDs), welche auf die flexible Leiterplatte montiert werden, als auch ungehäuste lichtemittierende Halbleiterkörper, welche auf die flexible Leiterplatte montiert werden. Die lichtemittierenden Halbleiterkörper können dabei auf anorganischen oder organischen elektrolumineszierenden Materialien basieren.

Nachteilig bei den herkömmlichen Vergussmethoden ist, dass die zur Verfügung stehenden Vergussanlagen einen geringen Automatisierungsgrad und folglich zu geringe Produktivität wie auch Einschränkungen hinsichtlich der Länge der produzierten LED-Bänder aufweisen. Die Fertigung von "Endlos"-LED-Bändern ist mit den bisher verfügbaren Verkapselungstechnologien nicht möglich.

Die Vorteile von endlos gefertigten LED-Bändern der oben genannten Art würden folgende bedeutenden Vorteile mit sich bringen:
- Konfektionierung vor Ort durch den Kunden; kundenspezifische Längenanpassung.
- Realisierbarkeit von großen Längen, wie sie beispielsweise für Fahrzeuge und Mittel der Transportwirtschaft und in der Architektur erforderlich sind.
- Kostenreduktion durch höheren Automatisierungsgrad.

Mittels Profil-Extrusion, -Coextrusion oder -Strangpressen lassen sich kostengünstige Basisprofile besonders bevorzugt im Endlosverfahren auf Rolle und/oder in deutlich größeren Längen als bisher möglich in beliebiger Form und Farbe herstellen. Wenn im Folgenden die Rede von Extrusion ist, soll durchwegs neben Monoextrusion auch Coextrusion und Strangpressen von diesem Begriff umfasst sein.

Anhand der WO 2014/036629 A1 ist ein Netzaufbau mit einer flexiblen Netzlage bekannt geworden, an der ein oder mehrere LED Schläuche angeordnet sind. Ein solcher LED Schlauch zwei langestreckte Leiter auf, die von einer gemeinsamen Isolierung umhüllt sind und zwischen der Isolierung und einem lang gestreckten Schlauch sind Leuchtdioden angeordnet.

Anhand der DE 10 2014 221 721 A1 ist ein Verfahren zur Herstellung eines bandförmigen Leuchtmoduls bekannt geworden, bei dem ein Grundkörper bereitgestellt wird, der Grundkörper mit einem Kleber versehen wird, ein transparentes Element an dem Grundkörper angebracht wird, eine mit Leuchtdioden bestückte Leiterplatte angebracht wird und der Kleber ausgehärtet wird.

Die Erfindung betrifft einen Leuchtdiodenstreifen nach Anspruch 1 und ein Leuchtdiodenband nach Anspruch 5 sowie ein Verfahren zur Herstellung eines Leuchtdiodenbandes nach Anspruch 17.

Vorteilhafte Ausgestaltungen und Weiterbildungen der Erfindung sind Gegenstand der jeweiligen abhängigen Ansprüche.

Dabei umfasst das Herstellen des LED-Streifens das wellig alternierende Ausbilden des LED-Streifens entlang seiner Längsrichtung bezüglich einer Montagefläche für den Leuchtdiodenstreifen zwischen lokalen Hochpunkten und lokalen Tiefpunkten. Das Herstellen der Welligkeit des flexiblen LED-Streifens erfolgt mittels Knicken oder Falten des flexiblen Leiterbandes senkrecht zu dessen Haupterstreckungsfläche und quer zu dessen Längsrichtung in vorgegebenen Abständen jeweils zwischen zwei LED-Chips oder Gruppen von LED-Chips Weiter wird das elastische Basisprofil mittels Profil-Extrusion hergestellt.
b) Bei Ausführungsformen des Verfahrens gemäß a) sind die SHORE-Härten des Materials des Basisprofils und des Materials der Vergussmasse und/oder des Abdeckprofils aneinander angeglichen. Die SHORE-Härten liegen dabei zwischen 20 und 40 shore D bei einer Temperatur von 23°C bzw. zwischen 20 und 25 shore D bei einer Temperatur von 23°C.
c) Bei einer Ausführungsform des Verfahrens gemäß a) oder b) wird das elastische Basisprofil im Wesentlichen aus aliphatischem oder aromatischem Polyurethan (PU) hergestellt.
d) Bei einer Ausführungsform des Verfahrens gemäß einem der Absätze a) bis c) wird das elastische Basisprofil im Wesentlichen aus thermoplastischem Elastomer (TPE)-Material (beispielsweise Thermoplastisches Elastomer auf Urethanbasis (TPU)) hergestellt.
e) Bei einer Ausführungsform des Verfahrens gemäß einem der Absätze a) bis d) wird das elastische Basisprofil im Wesentlichen aus PVC-Material, insbesondere Weich-PVC-Material, oder im Wesentlichen aus einem anderen elastischen Thermoplast-Material oder im Wesentlichen aus einem elastischen Duroplast-Material hergestellt.
f) Bei einer Ausführungsform eines Verfahrens gemäß einem der Absätze a) bis e) wird zur Verbesserung der Haftung der Vergussmasse, auf dem Basisprofil, mittels eines Corona-, eines Plasma-, eines chemischen und/oder eines mechanischen Verfahrens eine Oberflächenbeschaffenheit des Materials des Basisprofils, insbesondere dessen Oberflächenspannung, modifiziert.
g) Bei einer Ausführungsform eines Verfahrens gemäß einem der Absätze a) bis f) weist die Vergussmasse zumindest teilweise mindestens ein PU-Material auf.
h) Bei einer Ausführungsform eines Verfahrens gemäß einem der Absätze a) bis g) wird mit Vorteil der LED-Streifen vor dem Einführen in das Basisprofil versiegelt.
i) Bei einer Ausführungsform eines Verfahrens gemäß einem der Absätze a) bis h) wird das mit dem LED-Streifen und der Vergussmasse und/oder dem Abdeckprofil versehene Basisprofil in einem Härte- bzw. Trockenofen behandelt. Nachfolgend wird das fertiggestellte Leuchtdiodenband in vorgegebene Längen konfektioniert oder auf eine dritte Rolle aufgerollt.

Die Erfindung betrifft weiterhin
j) ein Leuchtdiodenband, bei dem ein aufrollbarer LED-Streifen, welcher ein mit Leuchtdioden (LED)-Chips bestücktes flexibles Leiterband (Flex-PCB) aufweist, in einem aufrollbaren elastischen Basisprofil fixiert ist und mit einer Vergussmasse und/oder einem, insbesondere aufrollbaren, Abdeckprofil abgedeckt ist.
k) Bei Ausführungsformen des Leuchtdiodenbandes gemäß Absatz j) sind die SHORE-Härten des Materials des Basisprofils und des Materials der Vergussmasse und/oder des Abdeckprofils aneinander angeglichen. Die SHORE-Härten liegen dabei zwischen 20 und 40 shore D bei einer Temperatur von 23°C bzw. zwischen 20 und 25 shore D bei einer Temperatur von 23°C.
1) Bei einer Ausführungsform gemäß Absatz j) oder k) weist das elastische Basisprofil aliphatisches oder aromatisches Polyurethan (PU) auf.
m) Bei einer anderen Ausführungsform gemäß Absatz j) oder k) weist das elastische Basisprofil thermoplastisches Elastomer (TPE)-Material (beispielsweise Thermoplastisches Elastomer auf Urethanbasis (TPU)) auf.
n) Bei einer anderen Ausführungsform gemäß Absatz j) oder k) weist das elastische Basisprofil PVC-Material, insbesondere Weich-PVC-Material, oder ein anderes elastisches Thermoplast-Material oder ein elastisches Duroplast-Material auf.
o) Bei einer Ausführungsform gemäß einem der Absätze j) bis n) ist die Vergussmasse aus mindestens einem PU-Material hergestellt.
p) Bei einer Ausführungsform gemäß einem der Absätze j) bis o) ist über den LED-Chips ein transparenter, insbesondere glasklarer Verguss angeordnet, der mit einer transluzenten Deckschicht überdeckt ist.
q) Bei einer Ausführungsform gemäß einem der Absätze j) bis p) ist der LED-Streifen separat versiegelt.
r) Bei einer Ausführungsform gemäß einem der Absätze j) bis q ist das Leuchtdiodenband auf eine Rolle aufgewickelt.
s) Bei einer Ausführungsform gemäß einem der Absätze j) bis q) ist das elastische Basisprofil mittels Coextrusion hergestellt und nur eine rückseitige Wand des Basisprofils ist mit mindestens einem gut wärmeleitenden Additiv versehen.

Ein Leuchtdiodenstreifen mit einem flexiblen Leiterband, auf dem eine Vielzahl von Leuchtdioden-Chips angeordnet und untereinander elektrisch verschaltet sind, ist entlang einer Längsrichtung bezüglich einer Montagefläche für den Leuchtdiodenstreifen zwischen lokalen Hochpunkten und lokalen Tiefpunkten wellig alternierend ausgebildet. Dabei ist die Welligkeit des flexiblen LED-Streifens mittels Knicken oder Falten des flexiblen Leiterbandes senkrecht zu dessen Haupterstreckungsfläche und quer zu dessen Längsrichtung in vorgegebenen Abständen jeweils zwischen zwei LED-Chips oder Gruppen von LED-Chips hergestellt.

Bei einer Ausführungsform liegt das flexible Leiterband des Leuchtdiodenstreifens entlang seiner Längsrichtung nicht durchgängig auf der dafür vorgesehenen Montagefläche bzw. auf einer darauf aufgebrachten Verbindungsschicht auf und verläuft über dieser wellig, derart, dass das flexible Leiterband jeweils zwischen zwei Auflagezonen des flexiblen Leiterbandes auf der Montagefläche bzw. Verbindungsschicht eine vorgegebene Wölbung weg von der Montagefläche bzw. Verbindungsschicht aufweist und dort von dieser beabstandet ist.

Bei einer Ausführungsform sind die LED-Chips jeweils über der Auflagezone des Leuchtdiodenstreifens oder benachbart zu der Auflagezone des Leuchtdiodenstreifens angeordnet.

Bei einer Ausführungsform des Leuchtdiodenstreifens sind streifenförmige Lötpads für die LED-Chips oder Gruppen mehrerer Lötpads für die LED-Chips vorhanden, wobei die Lötpads entlang einer Längsrichtung des Leuchtdiodenstreifens verlaufen bzw. aufgereiht sind.

Vorteilhafte Ausgestaltungen eines Leuchtdiodenstreifens (LED-Streifen) insbesondere zur Verwendung in derartigen LED-Bändern sind in den Patentansprüchen 2 bis 4 angegeben. Vorteilhafte Weiterbildungen des Verfahrens sind in den Patentansprüchen 6 bis 15 angegeben. Ein "endlos" gefertigtes LED-Band ist in Patentanspruch 16 angegeben. Vorteilhafte Weiterbildungen des LED-Bandes sind in den Patentansprüchen 17 bis 27 angegeben. Der Offenbarungsgehalt der Patentansprüche wird hiermit durch Rückbezug ausdrücklich in die Beschreibung mit aufgenommen.

Derart endlos gefertigte LED-Bänder bringen neben den oben bereits genannten folgende weitere bedeutende Vorteile mit sich:
- Integrierbarkeit von Befestigungssystemen.
- Integrierbarkeit von Linsentechnik.
- Farb-, Form- und Geometriefreiheit.
- Integrierbares Wärmemanagement.

Das Verfahren, das LED-Band und der Leuchtdiodenstreifen werden im Folgenden anhand von Ausführungsbeispielen in Verbindung mit den Figuren 1 bis 19 näher erläutert. Es zeigen:
Figur 1, eine schematische Darstellung einer perspektivischen Ansicht eines nach dem vorliegend beschriebenen Verfahren hergestellten LED-Bandes;
Figur 2, eine schematische Darstellung einer Verkapselungsanlage zur Herstellung eines LED-Bandes;
Figuren 3a bis 3h, in schematischer Darstellung perspektivische Ansichten (vgl. Figuren 3a bis 3c und 3h) bzw. Querschnitte (vgl. Figuren 3d bis 3g) verschiedener Varianten von Basisprofilen 1;
Figur 4, eine schematische Darstellung einer perspektivischen Ansicht eines Basisprofils mit Nutensteintechnik;
Figur 5, eine schematische Darstellung einer Variante einer Verkapselungsanlage zur Durchführung des Verfahrens;
Figuren 6 und 7, schematische Darstellungen von Schnittansichten zweier Ausführungsformen eines LED-Bandes mit einlaminierter funktioneller Folie;
Figuren 8 bis 11, schematische Darstellungen von Schnittansichten von vier verschiedenen Ausführungsformen eines LED-Bandes mit Basisprofil und Abdeckprofil;
Figur 12, eine schematische Darstellung einer exemplarischen Ausgestaltung einer Anlage zum Verkapseln mittels eines Basisprofils und eines Abdeckprofils;
Figur 13, eine schematische Darstellung einer Seitenansicht eines gewellt ausgebildeten LED-Streifens zur Verwendung in einem LED-Band;
Figuren 14 bis 17, jeweils eine schematische Veranschaulichung eines Verfahrens und einer Vorrichtung zum Herstellen von vier Varianten eines gewellt ausgebildeten LED-Streifens;
Figur 18, eine schematische Darstellung einer Schnittansicht einer weiteren Ausführungsform eines LED-Bandes mit Basisprofil;
Figur 19, eine schematische Darstellung von Ausführungsformen von Lötanschlüssen eines LED-Streifens.

In den unterschiedlichen Ausführungsbeispielen, Ausführungsformen und Ausgestaltungen sind gleiche und gleichwirkende Bestandteile figurenübergreifend jeweils mit denselben Bezugszeichen versehen. Die Figuren sind grundsätzlich nicht maßstabsgetreu. Die Größenverhältnisse der verschiedenen Bestandteile untereinander entsprechen nicht der Wirklichkeit. Beispielsweise können vergleichsweise kleine Elemente zur besseren Veranschaulichung übertrieben groß dargestellt sein und umgekehrt.

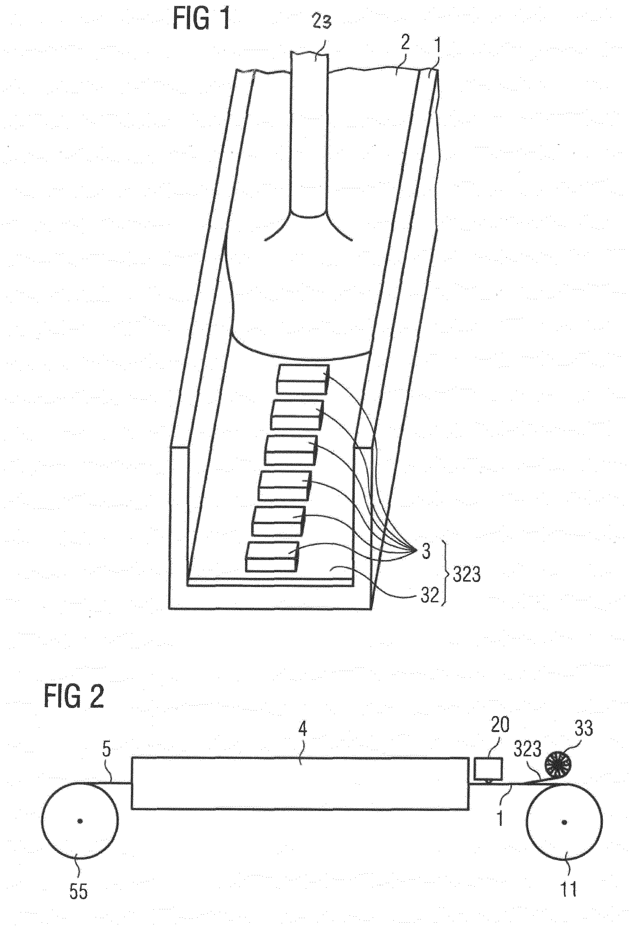

Vorzugsweise wird bei dem hier vorgestellten Verfahren mittels Profil-Extrusion ein bevorzugt im Wesentlichen aus thermoplastischem Elastomer(TPE)-Material (beispielsweise Thermoplastisches Elastomer auf Urethanbasis (TPU)) bestehendes oder im Wesentlichen TPE-Material aufweisendes oder ein weiterhin bevorzugt im Wesentlichen aus aliphatischem oder aromatischem Polyurethan (PU) bestehendes oder ein aliphatisches oder aromatisches Polyurethan (PU) aufweisendes elastisches Basisprofil 1 (vgl. bspw. Figur 1) hergestellt. Möglich ist weiterhin, dass das Basisprofil im Wesentlichen aus PVC-Material, insbesondere Weich-PVC-Material, besteht oder im Wesentlichen PVC-Material, insbesondere Weich-PVC-Material, aufweist. Ebenso geeignet sind elastische Duroplast-Materialien (wie beispielsweise ungesättigter Polyester (UP)) wie auch weitere Thermoplast-Materialien (wie zum Beispiel Polymethylmethacrylat(PMMA)-Material und Polycarbonat(PC)-Material), welche beispielsweise über Additive oder geeignete Abmischungen auch im ausgehärteten Zustand elastisch gehalten sind, so dass diese Werkstoffe biegbar, und vorzugsweise aufrollbar, sind.

Unter die Begriffe thermoplastisches Elastomer-Material, Duroplast-Material bzw. Thermoplast-Material fallen im vorliegenden Zusammenhang auch solche Materialien, die im Wesentlichen aus mindestens einem thermoplastischen Elastomer-Materialien, mindestens einem Duroplast-Material und/oder mindestens einem Thermoplast-Material bestehen, wie beispielsweise entsprechende Verbundmaterialen.

Das elastische Basisprofil 1 wird vorzugsweise mit einer Wandstärke (bzw. Wanddicke) von zwischen 1 mm und 3 mm, bevorzugt zwischen 1 mm und 2 mm hergestellt (wobei die Grenzwerte eingeschlossen sind), insbesondere bei Verwendung von aliphatischem oder aromatischem Polyurethan (PU) für die Herstellung des Basisprofils 1.

Dieses Basisprofil 1 wird vorzugsweise aufgerollt; es kann in unterschiedlichsten Geometrien und Farben hergestellt werden, woraus sich eine erhöhte Design-Freiheit ergibt.

Nach der Extrusion des Basisprofils 1 kann beispielsweise mittels eines Corona-, eines Plasma-, eines chemischen und/oder eines mechanischen Verfahrens eine Oberflächenbeschaffenheit, wie beispielsweise die Oberflächenspannung des Basisprofil-Materials, modifiziert werden. Dadurch kann, falls erforderlich, eine verbesserte Haftung zwischen dem Basisprofil-Material, vorzugsweise ein TPE- oder TPU-Material oder ein anderes der oben genannten mit Vorteil verwendbaren Materialien, und einer Vergussmasse 2, vorzugsweise ein PU-Material, das zum Vergießen, sprich Versiegeln der LED-Chips 3 inklusive flexibler Leiterplatte verwendet wird, erzielt werden.

Anstelle von TPE ist vorwiegend für das Extrudieren des Basisprofils 1 die Verwendung von anderen für den beschriebenen Zweck geeigneten Kunststoffen (z.B. thermoplastisches Polyurethan (TPU, vorzugsweise ein aliphatisches oder aromatisches Polyurethan (PU)) und PVC), von geeigneten Textilien und/oder von geeigneten Metallen (z.B. Aluminium und Kupfer) denkbar.

Zunächst wird bei dem hier vorgestellten Verfahren über Extrusion das Basisprofil 1 in beliebiger Länge vorzugsweise auf Rolle hergestellt. Dies kann in unterschiedlichen Querschnitts-Geometrien und Farben erfolgen.

Im Folgenden werden vorteilhafte Weiterbildungen des Verfahrens näher erläutert, wobei die Reihenfolge und die Nummerierung der Weiterbildungen keine Wertung hinsichtlich ihrer Bedeutung untereinander zum Ausdruck bringen sollen.

Bei dem in Figur 1 veranschaulichten Verfahren wird über eine oberhalb des Basisprofils 1 angeordneten Düse 23 eine Vergussmasse 2, welche beispielsweise aus einem oben angegebenem Material, bevorzugt aus PU besteht, in das Basisprofil 1 eingefüllt. In das Basisprofil 1 ist ein LED-Streifen 323 eingelegt, welcher eine Mehrzahl von auf einem flexiblen Leiterband (Flex-PCB) 32 angeordneten LED-Chips 3 aufweist. Das Basisprofil 1 ist beispielsweise aus TPE-Material oder TPU-Material, vorzugsweise ein aliphatisches oder aromatisches Polyurethan (PU), gefertigt. Der LED-Streifen 323 kann beispielsweise mittels eines doppelseitigen Klebestreifens oder mittels einer andersartigen Verbindungsschicht im Basisprofil fixiert sein.

### Erste vorteilhafte Weiterbildung (vgl. Figur 2):

Bei einer ersten vorteilhaften Weiterbildung des Verfahrens wird das Basisprofil 1 von einer insbesondere für Aufbewahrung und Transport vorgesehene Rolle 11 in eine Vergussanlage 20 eingeführt. Ggf. ebenfalls von einer insbesondere für Aufbewahrung und Transport vorgesehenen Rolle 33 wird das mit LED-Chips 3 bestückte flexible Leiterband 32 (Flex-PCB), sprich der LED-Streifen 323, über geeignete Führungsmittel (nicht eingezeichnet) in das Basisprofil 1 eingeführt - und zwar örtlich vor der Vergussanlage 20 - und im Basisprofil 1 beispielsweise mittels eines Doppelklebebandes (in den Figuren nicht gezeigt) oder einer andersartigen Verbindungsschicht, insbesondere Klebstoffschicht fixiert.

Diese beiden Komponenten (Basisprofil 1 und Leiterband 32 mit LED-Chips 3) laufen durch die Vergussanlage 20 und das Basisprofil 1 wird mit einer Vergussmasse 2, vorzugsweise mit einer PU-Masse aufgefüllt. Als Vergussmasse 2 ebenso denkbar ist beispielsweise Silikonmaterial. Von der Verguss-Anlage 20 läuft das derart vergossene Basisprofil 1 mit den darin angeordneten LED-Chips 3 auf flexibler Leiterplatte 32 zum Härten der Vergussmasse 2 direkt in einen Härte- bzw. Trockenofen 4 und wird danach als fertiges "Endlos"-LED-Band 5 auf eine insbesondere für Aufbewahrung und Transport vorgesehene Rolle 55 aufgewickelt oder alternativ auf gewünschte Längen konfektioniert. Der Vollständigkeit halber sei erwähnt, dass das vorgestellte Verfahren nicht auf einen Fertigungsprozess wie er hier beispielhaft erläutert ist, eingeschränkt ist, sondern dass die Prozessabfolge abgewandelt werden kann, dass beispielsweise anstelle des Härte- bzw. Trockenofens 4 die gesamte Vergussanlage 20 in einer Härte- bzw. Trockenkammer angeordnet ist oder dass beispielsweise das fertige LED-Band nicht aufgerollt, sondern zum Beispiel kundenspezifisch in beliebigen Längen gefertigt wird.

Die Vergussmasse 2 kann mehrschichtig ausgebildet werden und kann dabei mehrere verschiedenartige Schichten aufweisen.

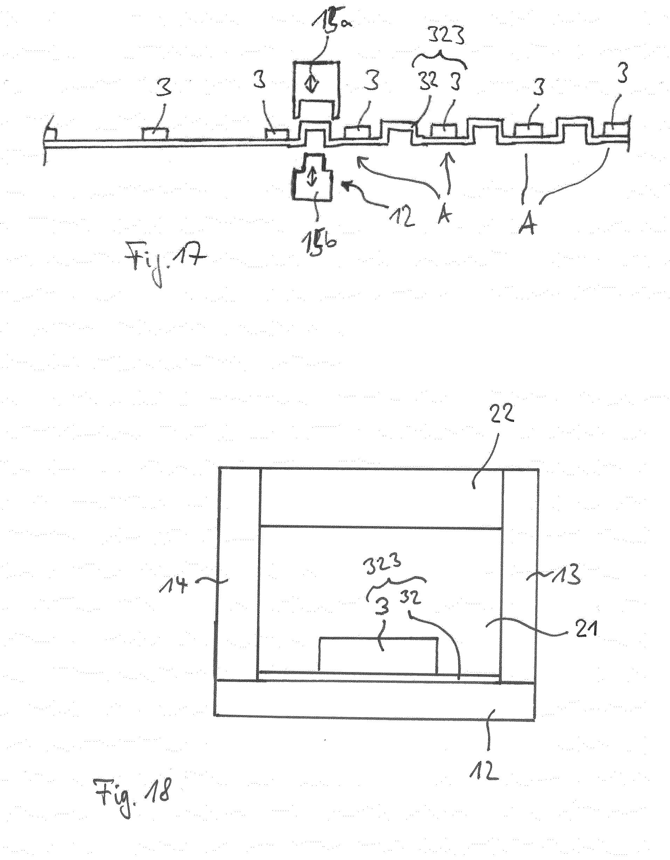

So kann zum Beispiel (vgl. Figur 18) ein zunächst über den LED-Chips hergestellter transparenter, sprich bild- oder blickdurchlässiger, insbesondere glasklarer Grund-Verguss 21 (zum Beispiel PU tansparent), mit einem transluzenten, sprich lichtdurchlässigen aber undurchsichtigen Deck-Verguss 22 (zum Beispiel PU diffus, beispielsweise vermittels eines geeigneten Füllstoffes) übergedeckt werden, um beispielsweise das abgestrahlte Licht zu homogenisieren. Eine derartige Darstellung der Vergussmasse 2 bringt den besonderen Vorteil mit sich, dass Leuchtpunkte, insbesondere hervorgerufen durch beabstandet zueinander angeordnete LED-Chips, von außen "unsichtbar" gemacht werden können und damit das LED-Band von außen als durchgehend homogen abstrahlendes Leuchtband erkennbar ist. Dazu können zunächst vorzugsweise 60 bis 90%, besonders bevorzugt 70 bis 90% der gesamten Vergussmasse 2, sprich der Grund-Verguss vorteilhafterweise als Klarverguss (bspw. aus klarem PU- oder klarem Silikon-Material) aufgebracht werden und die verbleibenden 10 bis 40% bzw. 10 bis 30% der Vergussmasse, sprich der Deck-Verguss, mit einem lichtstreuenden Füllstoff versehen und nachfolgend auf den Grund-Verguss aufgebracht werden, um diesen Teil der Vergussmasse transluzent zu machen. Dadurch kann eine deutliche Material- und damit Kosteneinsparung für den Füllstoff erzielt werden. Gleichzeitig kann Lichtabsorption in der Vergussmasse 2 gering gehalten werden. Der Deck-Verguss ist beispielsweise ebenfalls auf PU- oder Silikon-Material-Basis hergestellt. Als lichtstreuender Füllstoff eignen sich beispielsweise Pulver aus Siliziumoxid, Zirkonoxid, Aluminiumoxid, Titanoxid und/oder Glas.

Ebenso kann/können als Vergussmasse 2 eine oder mehrere, insbesondere partiell unterschiedlich eingefärbte Vergussschicht/en aufgebracht werden.

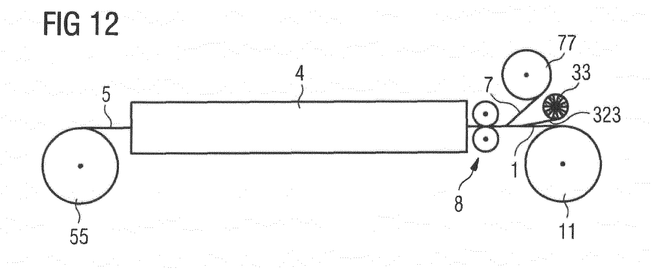

### Zweite vorteilhafte Weiterbildung (vgl. Figur 12):

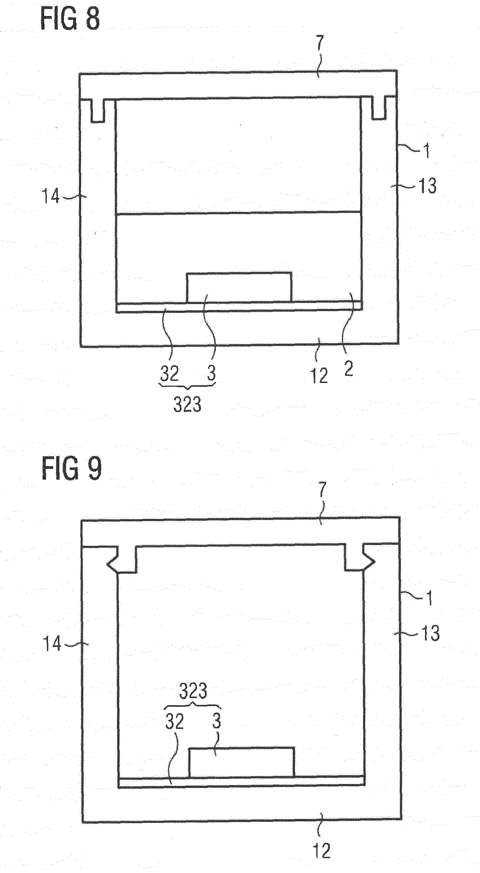

Bei einer zweiten vorteilhaften Weiterbildung des Verfahrens wird das Basisprofil 1 nach einem Einführen und Fixieren des mit LED-Chips 3 bestückten flexiblen Leiterbandes 32, sprich des LED-Streifens 323, ins bzw. im Basisprofil 1 statt mit einer Vergussmasse 2, wie es bei der oben beschriebenen ersten Weiterbildung der Fall ist, mit einem Abdeckprofil 7 (vgl. die Figuren 8 bis 11), verschlossen, welches bevorzugt wiederum mittels Profil-Extrusion hergestellt ist. Das Abdeckprofil 7 kann elastisch ausgebildet sein.

Das Abdeckprofil 7 kann dabei vorteilhafterweise eines oder mehrere der oben in Verbindung mit dem Basisprofil 1 angeführten Materialien, insbesondere schlagzäh-modifiziertes PMMA oder UV-stabilisiertes PC aufweisen oder daraus bestehen und ist zumindest bereichsweise für ein von dem betreffenden LED-Band erzeugtes Licht durchlässig ausgebildet.

Das Basisprofil 1 und das Abdeckprofil 7 können beispielsweise mittels Ineinanderschieben zum Beispiel nach dem Nut-Feder-Prinzip (vgl. Figur 8), mittels Ineinanderklicken (vgl. Figuren 9 bis 11), mittels Verpressen, mittels Kleben und/oder mittels Schweißen auf einfache und damit wirtschaftliche Weise miteinander verbunden werden.

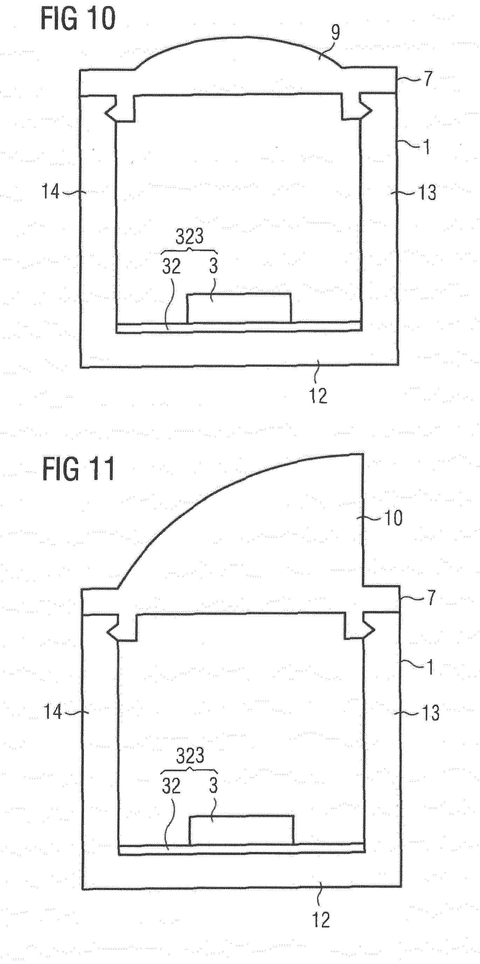

Das Abdeckprofil 7 kann mit Vorteil eine optische Funktionalität aufweisen, beispielsweise derart ausgestaltet sein, dass es eine Linsen- (vgl. Figur 10, Linsenteil 9) und/oder Strahlumlenkwirkung (vgl. Figur 11, Reflektorteil 10) aufweist oder mit Diffusoren zur Strahlungshomogenisierung ausgerüstet ist.

Das mit LED-Chips 3 bestückte flexible Leiterband 32 kann beispielsweise über Lackierprozesse, Polymer-Beschichtung, Parylene-Beschichtung oder ähnliches versiegelt sein, beispielsweise für einen Spritzwasserschutz. Eine derartige Versiegelung stellt jedoch keinen hinreichenden Schutz vor mechanischen Einflüssen und/oder gröberen Witterungseinflüssen dar. Diese Schutzfunktion übernimmt bei dieser Weiterbildung das Abdeckprofil 7 zusammen mit dem Basisprofil 1. Dadurch können hohe IP-Schutzklassen auf einfache und damit wirtschaftlich günstige Weise realisiert werden.

Die Figur 12 zeigt eine schematische Darstellung einer exemplarischen Ausgestaltung einer Anlage zum Verkapseln mittels eines Basisprofils 1 und eines Abdeckprofils 7 gemäß der zweiten Weiterbildung des Verfahrens. Das Basisprofil 1 und das Abdeckprofil 7 werden dabei ebenso wie der LED-Streifen 323 jeweils von einer zugehörigen insbesondere für Aufbewahrung und Transport vorgesehenen Rolle 11, 77 bzw. 33 abgerollt und über geeignete Führungsmittel (nicht eingezeichnet) derart zusammengeführt, dass der LED-Streifen 323 in das Basisprofil 1 eingeführt und nachfolgend das Abdeckprofil 7 auf das Basisprofil 1 aufgesetzt wird. In einer nachfolgend angeordneten Fügevorrichtung 8, welche beispielsweise zwei übereinander angeordnete Walzen aufweist, die das Basisprofil 1 und das Abdeckprofil 7 aneinanderdrücken, zusammengefügt. Der Fügeprozess kann ein Verpressen (z. B. durch Nut-Feder-Prinzip), Verkleben, Verschweißen o. ä. von Basisprofil 1 und Abdeckprofil 7 aufweisen. Der in dieser Anlage vorgesehene, der Fügevorrichtung 8 nachgeordnete Härte- bzw. Trockenofen 4 kann weggelassen werden, falls nach dem Verbinden des Abdeckprofils 7 mit dem Basisprofil 1 kein Härte- oder Trockenschritt beispielsweise für eine etwaige Verbindungsschicht (z.B. Klebstoffschicht) zwischen den beiden Profilen oder für eine etwaige Versiegelungsschicht für das mit LED-Chips 3 bestückte flexible Leiterband 32 erforderlich ist. Nach Durchlaufen des Härte- bzw. Trockenofens 4 bzw., falls ein solcher aus den oben genannten Gründen nicht erforderlich ist, der Fügevorrichtung 8 wird das so gefertigte "Endlos"-LED-Band 5 auf eine weitere insbesondere für Aufbewahrung und Transport vorgesehene Rolle 55 aufgewickelt.

### Dritte vorteilhafte Weiterbildung:

Bei einer dritten vorteilhaften Weiterbildung des Verfahrens sind die erste und die zweite vorteilhafte Weiterbildung miteinander kombiniert. Dabei wird ein gemäß der ersten vorteilhaften Weiterbildung mit einer Vergussmasse 2 (mögliche verschiedene Varianten wie oben beschrieben) versehenes Basisprofil 1 zusätzlich gemäß der zweiten vorteilhaften Weiterbildung mit einem Abdeckprofil 7 versehen. In Figur 8 ist dies beispielhaft veranschaulicht, wobei hier das Basisprofil 1 nicht vollständig mit der Vergussmasse 2 gefüllt ist. Ein vollständiges Ausfüllen des Basisprofils 1 mit Vergussmasse 2 ist jedoch ebenso denkbar. Die Vergussmasse 2 kann wie oben bei der Erläuterung der ersten vorteilhaften Weiterbildung unter Angabe von verschiedenen Beispielen beschrieben, mehrschichtig ausgebildet werden.

Eine solche Kombination von Basisprofil 1, Vergussmasse 2 und Abdeckprofil 7 kann besonders in Regionen mit hoher UV- und/oder Oberflächenbelastung insbesondere durch Wind und Sand besondere Vorteile mit sich bringen. Das Abdeckprofil 7, beispielsweise aus PMMA gefertigt, schützt dabei den PU-Verguss vor schädlichen Umgebungs- und Witterungseinflüssen und erhöht dadurch die Lebensdauer eines entsprechenden LED-Bandes deutlich. Das Abdeckprofil 7 kann so ausgelegt werden, dass es nach Abnutzung durch Umgebungs- und Witterungseinflüsse auf einfache Weise durch eine neues ausgetauscht werden kann. Folglich muss nicht das komplette LED-Band sondern nur das Abdeckprofil 7 gewechselt werden, was mit einer wesentlichen Kostenersparnis einhergeht.

Die Reihenfolge der oben erläuterten Weiterbildungen soll keine Abstufung hinsichtlich der relativen Bedeutung der Weiterbildungen zueinander zum Ausdruck bringen. Sie ist rein zufällig so gewählt.

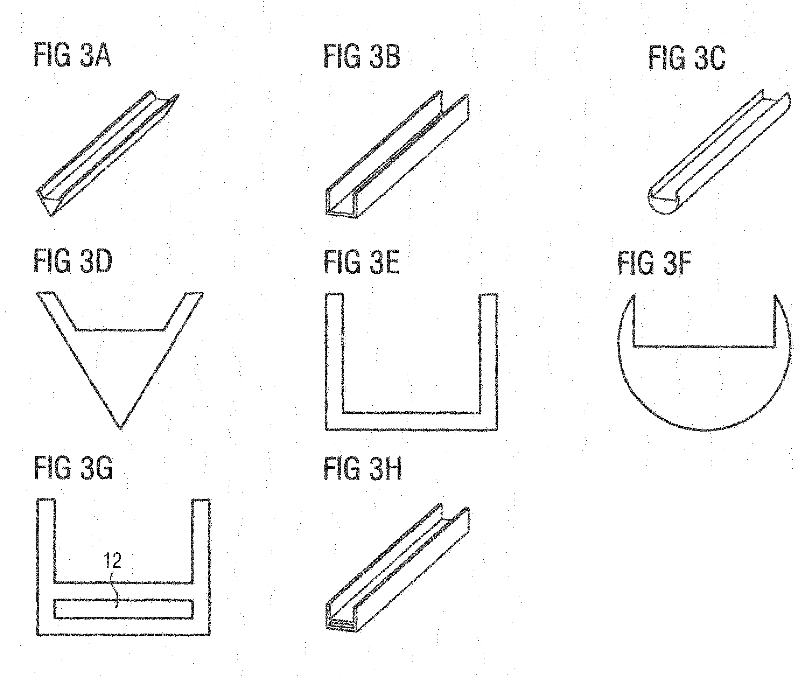

Die folgenden Ausführungen beziehen sich, wo nicht ausdrücklich anders angegeben, auf alle drei oben erläuterten vorteilhaften Weiterbildungen:
Durch die Vielfältigkeit der Profil-Extrusion können vielfältige Basisprofil und Abdeckprofil-Geometrien kostengünstig generiert werden *(vgl. die* *Figuren 3a bis 3h**, welche in schematischer Darstellung eine perspektivische Ansichten (vgl.* *Figuren 3a bis 3c und 3h*) bzw. Querschnitte *(vgl.* *Figuren 3d bis 3g**) verschiedener Varianten von Basisprofilen 1 zeigen. Folgende Figuren gehören paarweise zusammen: 3a*/*3d; 3b*/*3e; 3c*/*3f und 3g*/*3h).*

Die extrudierten Basisprofile 1 und/oder Abdeckprofile 7 können auf einfache Weise mit zusätzlichen Merkmalen wie Montagelaschen (vgl. Figuren 3g und 3h) oder anderweitigen Montageelementen ausgestattet werden, und zwar in einem sogenannten In-line-Verfahren ohne wesentliche zusätzliche Arbeitsschritte.

In der in den Figuren 3g und 3h dargestellte Lasche 12 des Basisprofils 1 kann zum Beispiel zu dessen Verstärkung/Versteifung beispielsweise eine Metallschiene oder ein anderes versteifendes Elemente angeordnet werden. Eine integrierte Metallschiene kann auch zu einer verbesserten Wärmeableitung beitragen. Ebenso denkbar ist eine Integration der Energiezufuhr oder Elektronik/Steuerfunktion.

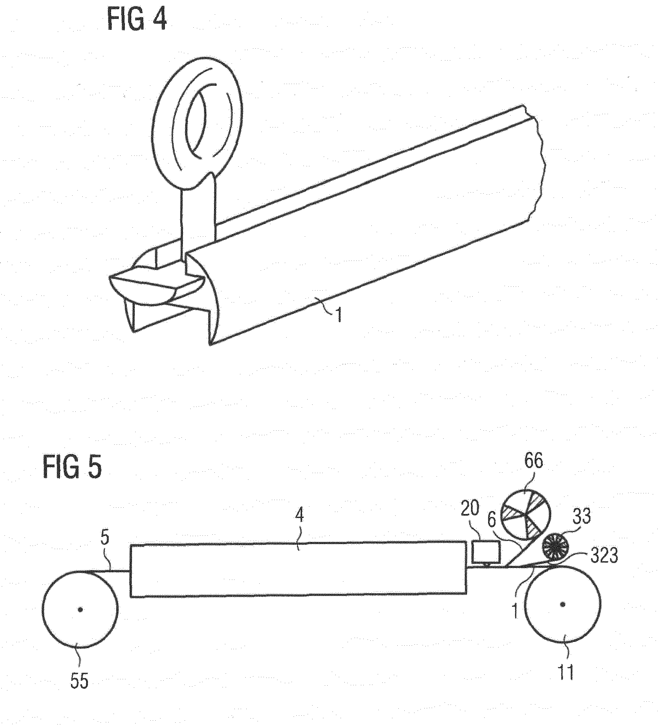

Weiterhin denkbar ist die Integration einer Nutensteintechnik in das extrudierte Basisprofil *(vgl.* *Figur 4**, welche eine schematische Darstellung einer perspektivischen Ansicht eines derartig ausgestalteten Basisprofils zeigt).* Dadurch können im In-line-Verfahren Montagehilfen generiert werden, was unter anderem die Herstellung von kompletten Leuchten von der Rolle ermöglichen kann.

Eine weitere durch das vorgestellte Verfahren eröffnete vorteilhafte Zusatzoption besteht darin, dass eine Integration von Zusatzelementen beispielsweise mittels In-line-Lamination einer funktionellen Folie 6 auf technisch einfache Weise vorzugsweise ebenfalls über eine Rolle 66 möglich ist *(vgl.* *Figur 5**, welche eine schematische Darstellung einer Variante einer Verkapselungsanlage zeigt).* Beispielweise kann eine Polymethylmethacrylat (PMMA)-, eine Polycarbonat- oder eine Polypropylen-Folie (oder andere geeignete transparente Folien), welche eine Farbortverschiebung bei Verwendung von Konversions-LEDs durch direkten Kontakt mit PU verhindert. Ebenso ist die Einbringung anderweitiger funktionaler Schichten im In-line-Verfahren möglich.

Bei dem in Figur 5 veranschaulichten Verfahren wird ergänzend zu dem oben in Verbindung mit Figur 2 beschriebenen Verfahren eine funktionelle Folie 6 von einer weiteren insbesondere für Aufbewahrung und Transport vorgesehenen Rolle 66 abgerollt und über geeignete Führungsmittel (nicht eingezeichnet) auf die LED-Chips 3 des LED-Streifens 323 geführt. Nach Durchlaufen des Härte- bzw. Trockenofens 4 wird das so gefertigte "Endlos"-LED-Band 5 auf eine weitere insbesondere für Aufbewahrung und Transport vorgesehene Rolle 55 aufgewickelt.

Eine funktionelle Folie 6 kann auch bei einem Verfahren, wie es oben in Verbindung mit der Figur 12 beschrieben ist, entsprechend eingefügt werden.

Bei den in Verbindung mit den Figuren 2, 5 und 12 beschriebenen Verkapselungsanlagen kann alternativ ggf. der der Vergussanlage 20 bzw. der Fügevorrichtung 8 nachgeordnete Härte- bzw. Trockenofen 4 weggelassen werden und die Anlage, umfassend die Rollen 11, 33 und 55 und ggf. 66 und/oder 77, ggf. die Vergussanlage 20, ggf. die Fügevorrichtung 8 und die Führungsmittel (nicht eingezeichnet) insgesamt in einer Härte- oder Trockenkammer angeordnet werden.

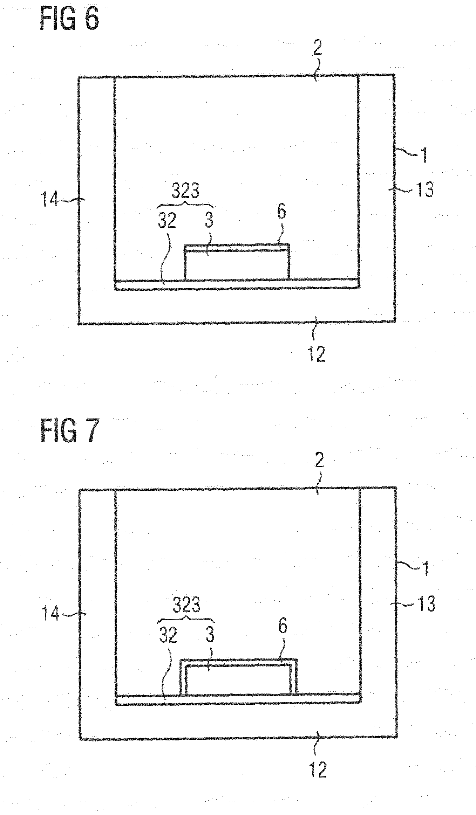

Eine auf die LED-Chips auflaminierte Folie, beispielsweise eine PMMA-Folie (beispielsweise zur Vermeidung einer Farbortverschiebung) kann mit Vorteil exakt über den LED-Chips auflaminiert werden, falls gewünscht mit geringfügigem Überstand, sodass die Flanken des LED-Chips teilweise oder vollständig von der funktionellen Folie bedeckt sind *(vgl.* *Figuren 6 und* 7, *welche schematische Schnittansichten fertiggestellter LED-Bänder mit einlaminierter funktioneller Folie 6 zeigen).* Eine solche (Trenn-)Folie wird beim Vergießen des Basisprofils auf die LED-Chips aufgedrückt. Die (Trenn-)Folie kann eingefärbt sein. Sie kann alternativ oder zusätzlich zur Homogenisierung des von den LED-Chips abgestrahlten Lichtes oder als Linse ausgestaltet sein. Eine solche Folie kann alternativ oder zusätzlich lichtstreuende und/oder lichtbrechende Eigenschaften haben. Eine solche Folie kann auch einen "Blendschutz" bewirken, welcher beispielsweise durch eine integrierte lichtbrechende Struktur bzw. Narbung erreicht wird. Derartige Eigenschaften generieren wesentliche Vorteile für die Beleuchtung von Transportmitteln wie zum Beispiel Lastkraftwagen, Anhänger, Wohnmobile usw.

Eine weitere durch das vorgestellte Verfahren gemäß der ersten Weiterbildung eröffnete vorteilhafte Zusatzoption besteht darin, dass mittels einer als oberste Schicht auf die Vergussmasse 2 auflaminierten kratzfesten oder kratzfest beschichteten Folie die Kratzfestigkeit des Produktes erheblich verbessert werden kann. Eine solche Folie kann im In-line-Verfahren vor oder nach dem Härten der Vergussmasse 2 auf den Verbund aus Basisprofil 1, LED-Streifen, ggf. funktioneller Folie 6, Vergussmasse 2 und ggf. weiterer Bestandteile des LED-Bandes aufgebracht, insbesondere auflaminiert werden. Dadurch können Anwendungen, welche eine hohe Kratzfestigkeit voraussetzen, realisiert werden. Als Beispiel können hier in Bodenflächen integrierte Leuchtbänder genannt werden. Eine solche Folie kann alternativ oder zusätzlich lichtstreuende und/oder lichtbrechende Eigenschaften haben. Eine solche Folie kann auch einen "Blendschutz" bewirken, welcher beispielsweise durch eine integrierte lichtbrechende Struktur bzw. Narbung erreicht wird. Derartige Eigenschaften generieren wesentliche Vorteile für die Beleuchtung von Transportmitteln wie zum Beispiel Lastkraftwagen, Anhänger, Wohnmobile usw.

Alternativ zur kratzfesten oder kratzfest beschichteten Folie kann ein kratzfester Lack, beispielsweise ein Polyurethan(PU)-Lack eingesetzt werden, oder eine im In-line-Verfahren aufgebrachte stark vernetzte und somit kratzbeständige PU-Schicht. Eine im In-line-Verfahren aufgebrachte oberste Schicht, ob kratzfest oder nicht, kann zur Homogenisierung des von den LED-Chips abgestrahlten Lichtes oder als Linse ausgestaltet sein. Eine solche Schicht kann transparent, transluzent, homogenisierend oder eingefärbt ausgerüstet sein. Eine solche oberste Schicht kann auch optische bzw. qualitative Vorteile mit sich bringen, wenn dadurch beispielsweise eventuelle Lufteinschlüsse (z.B. aufgrund Bläschenbildung) in der Vergussmasse 2 abgedeckt werden.

Mit den vorliegend vorgestellten Verfahren können LED-Bänder hergestellt werden, welche ein mittels Extrusion hergestelltes elastisches Basisprofil 1 aufweisen, in dem eine flexible, vorzugsweise aus Polyimid gefertigte Leiterplatte (Flex-PCB) 32 mit Chip-on-Board(COB)-montierten LED-Chips 3 angeordnet ist und das zum Schutz vor mechanischen und witterungsbedingten Einflüssen der LED-Chips 3 inklusive Flex-PCB 32
- mit einer flexiblen Vergussmasse 2, besonders bevorzugt mit einem PU-Material (weiterhin bevorzugt ist z.B. Silikonmaterial), beispielsweise wie oben beschrieben vergossen ist (vgl. die Figuren 1, 6 und 7) oder
- mit einem mittels Extrusion hergestellten flexiblen Abdeckprofil 7 beispielsweise wie oben beschrieben verschlossen ist (vgl. Figuren 9 bis 11) oder
- sowohl mit einer flexiblen Vergussmasse 2, besonders bevorzugt mit einem PU-Material (weiterhin bevorzugt ist z.B. Silikonmaterial), beispielsweise wie oben beschrieben vergossen ist als auch mit einem mittels Extrusion hergestellten flexiblen Abdeckprofil 7 beispielsweise wie oben beschrieben verschlossen ist (vgl. Figur 8).

Das Basisprofil 1 ist vorzugsweise aus einem Material und in einer Wandstärke gefertigt, wie es bzw. sie weiter oben in Verbindung mit der Beschreibung des Verfahrens zu dessen Herstellung bereits angegeben ist (siehe oben den zweiten, dritten und vierten Absatz nach der Figurenkurzbeschreibung). Zwischen dem Basisprofil 1 und der flexiblen Leiterplatte 32 kann ein doppelseitiges Klebeband oder eine anderweitige Haftschicht (in den Figuren nicht gezeigt) angeordnet sein. Zwischen den LED-Chips 3 und der Vergussmasse 2 kann eine funktionelle Folie 6, beispielsweise eine Trennfolie zur Vermeidung einer Farbortverschiebung angeordnet sein. Die funktionelle Folie 6 kann alternativ oder zusätzlich lichthomogenisierende, lichtstreuende und/oder lichtfokussierende Eigenschaften haben. Das Basisprofil 1 kann mit metallischen Elementen wie beispielsweise Metallschienen oder mit Füllstoffen ausgerüstet sein, die die Wärmeableitung von LED-Chips 3 verbessern. Des Weiteren können die Basisprofile 1 Montageelemente aufweisen, die eine Montage der verkapselten LED-Bänder vereinfachen.

Die Basisprofile können beispielsweise mittels Coextrusion mit unterschiedlichen Eigenschaften in verschiedenen Querschnitts-Bereichen ausgestaltet werden. Beispielsweise kann die rückseitige Wand 12 des Basisprofils 1 und damit die Rückseite des LED-Bandes 5 lichtundurchlässig ausgestaltet werden und die seitlichen Wände 13,14 des Basisprofils 1 lichtdurchlässig ausgestaltet sein, um eine seitliche Lichtabstrahlung des LED-Bandes 5 zu ermöglichen.

Die als Basisprofil eingesetzten extrudierten Profile können durch Ausrüstung mit einem oder mehreren geeigneten Additiven wärmeableitende Eigenschaften aufweisen und dadurch im Betrieb der LED-Bänder zu einer verbesserten Wärmeableitung von den LED-Chips beitragen und deren Lebensdauer verlängern und/oder die Leistung der LED-Bänder erhöhen. Beispielsweise kann mittels Coextrusion nur die rückseitige Wand 12 des Basisprofils 1 oder lediglich die Auflagefläche des Basisprofils 1, sprich des LED-Bandes 5, mit gut wärmeleitenden Additiven, beispielsweise metallischen oder keramischen Additiven versetzt werden (vgl. Figur 18). Durch eine solche Ausgestaltung können wesentlich höhere Lichtströme/Lumen erzielt werden und auch die Lebensdauer der LED-Chips kann durch dadurch verbessertes Wärmemanagement erhöht werden. Ein Material für eine derart ausgestaltete rückseitige Wand 12 des Basisprofils 1 ist beispielsweise ALCOM TCE PC 5020 15011 der Firma Albis Plastic GmbH.

Die Innenseiten eines Basisprofils können zumindest teilweise reflektierend ausgerüstet oder ausgebildet sein, zum Beispiel können reflektierende Folien (zum Beispiel metallisierte PET-Folien) kostengünstig im Extrusionsprozess auflaminiert werden.

Das Abdeckprofil 7 ist gegebenenfalls vorzugsweise aus schlagzäh-modifiziertem PMMA oder UV-stabilisiertem PC gefertigt.

Bei einer Ausgestaltung eines oben beschriebenen LED-Bandes ist das flexible Leiterband 32 derart ausgebildet, dass es zumindest entlang der Längsrichtung L des LED-Streifens 323 - und damit auch zumindest entlang der Längsrichtung des LED-Bandes 5 wie auch des Basisprofils 1 - bezüglich einer Montagefläche M für den LED-Streifen 323 gewellt verläuft. Mit anderen Worten ist das flexible Leiterband 32 derart ausgebildet, dass sein Verlauf zumindest entlang der Längsrichtung L des LED-Streifens 323 bezüglich einer Montagefläche M für den LED-Streifen 323 eine Welligkeit aufweist.

Diese Ausbildung des flexiblen Leiterbandes 32 bringt unter anderem den bedeutenden Vorteil mit sich, dass ein LED-Band 5 eine deutlich erweiterte Biegbarkeit aufweist, insbesondere parallel zur Montagefläche M, weil sich das Leiterband 32 aufgrund der Welligkeit auf der Innenseite der Biegung stauchen und auf der Außenseite der Biegung strecken lässt.

Zudem ergibt sich aus dieser Ausbildung des flexiblen Leiterbandes 32 unter anderem auch der bedeutende Vorteil, dass mechanischer Stress innerhalb eines LED-Bandes 5 aufgrund von unterschiedlichen thermischen Ausdehnungen bzw. Schrumpfungen der Komponenten im LED-Band 5 (Basisprofil 1, Vergussmasse 2, LED-Streifen 323, ...), der zu einer Schädigung durch Reißen des flexiblen Leiterbandes 32 führen kann, deutlich verringert werden kann. Dies wird umso bedeutender, je länger die gefertigten LED-Bänder sind.

Temperaturunterschiede zum Beispiel bei Außenanwendungen und die damit verbundenen Spannungen durch Ausdehnung oder Schrumpfung stellen eine wesentliche Herausforderung bei langen verkapselten LED-Bändern dar. Bislang stellt dieses Problem bei langen ("endlos gefertigten") LED-Bändern ein praktisch noch ungelöstes Problem dar. Bekannte Verkapselungssysteme lassen nur sehr limitierte Längen von LED-Bändern zu, weil sich mit zunehmender Länge des LED-Bandes mechanische Spannungen innerhalb des LED-Bandes aufgrund unterschiedlicher thermischer Ausdehnungen bzw. Schrumpfungen erhöhen.

Ein weiterer sich aus dieser Ausbildung des flexiblen Leiterbandes 32 ergebender Vorteil besteht unter anderem darin, dass der Abstand zwischen den LED-Chips 3 in einem LED-Band 5 auf einfache Weise verringert werden kann. Dadurch können homogenere Licht-Lösungen erreicht werden.

Unter "gewellt" ist vorliegend jedwede Form des flexiblen Leiterbandes 32 (wie zum Beispiel wellenartig gebogen, zickzack-artig geknickt oder eine Kombination aus Knicken und Bögen) zu fassen, infolge derer das flexible Leiterband 32, wenn es in das Basisprofil 1 oder auf einen anderweitigen flächigen Träger montiert ist, entlang seiner Längsrichtung L nicht durchgängig auf dessen Boden- bzw. Montagefläche M bzw. auf einer darauf aufgebrachten Verbindungsschicht (bspw. ein doppelseitiges Klebeband) aufliegt, sondern über dieser in vorgegebener Weise wellig verläuft, sprich jeweils zwischen zwei Auflagezonen A des flexiblen Leiterbandes 32 auf dem Basisprofil 1 bzw. auf der Verbindungsschicht eine bogenartige oder zackenartige Wölbung weg vom Basisprofil 1 bzw. Träger aufweist. Mit anderen Worten ist das flexible Leiterband 32 derart geformt, dass sein Verlauf entlang seiner Längsrichtung L bezüglich einer Montagefläche M für den LED-Streifen 323, wie beispielsweise die Bodenfläche des Basisprofils 1, zwischen lokalen Hochpunkten und lokalen Tiefpunkten alterniert.

Das flexible Leiterband 32 ist dabei bei einer Ausführungsform derart geformt, dass die LED-Chips 3 jeweils über einer Auflagezone A oder benachbart zu einer Auflagezone A angeordnet sind, was eine Wärmeableitung von den LED-Chips 3 verbessern kann.

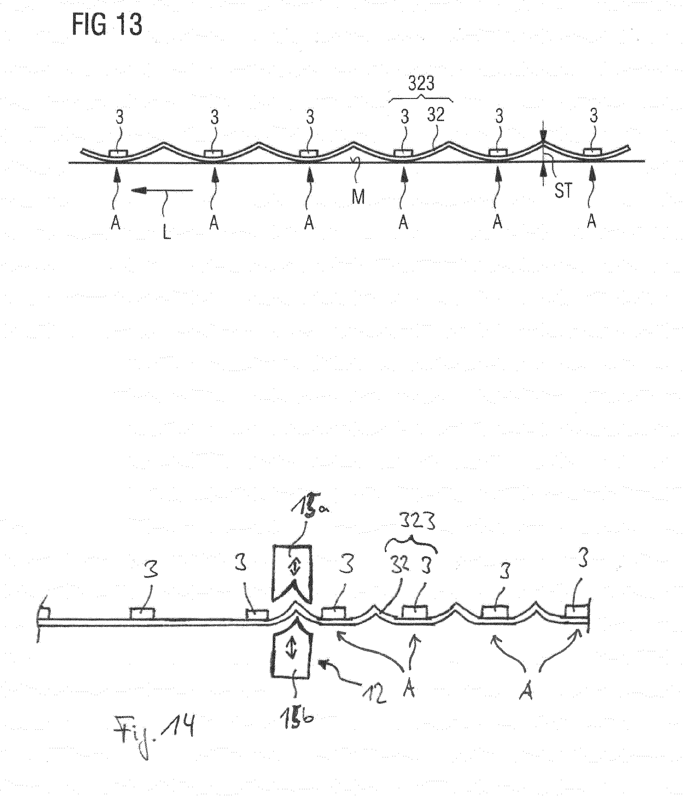

Eine gewellte Form kann beispielsweise durch Knicken oder Falten des flexiblen Leiterbandes 32 senkrecht zu dessen Haupterstreckungsfläche und quer zu dessen Längsrichtung L in vorgegebenen Abständen, beispielsweise jeweils zwischen zwei LED-Chips 3, hergestellt werden. Eine beispielhafte Ausgestaltung eines derartigen LED-Streifens 323 mit gewelltem flexiblem Leiterband 32 ist in der Figur 13 veranschaulicht.

Ein entsprechender Knick- oder Faltprozess für einen LED-Streifen 323, der vorzugsweise nach dem Aufbringen der LED-Chips 3 aber auch davor durchgeführt wird, kann den oben beschriebenen Verfahren vorgeschaltet oder in diese integriert werden. Bei einem integrierten Knick- oder Faltprozess ist eine zugehörige Knick- oder Falteinrichtung bei den Vorrichtungen gemäß den Figuren 2, 5 und 12 zwischen der Rolle 33 mit dem LED-Streifen 323 und dem Bereich angeordnet, in dem der LED-Streifen 323 in das Basisprofil 1 eingeführt wird.

Das flexible Leiterband 32 kann aufgrund dieser Formgebung in allen Dimensionen gebogen werden und damit eine verbesserte Biegbarkeit des LED-Bandes 5 in allen Dimensionen ermöglichen.

Bei einer typischen Breite des LED-Streifens 32 von 8 mm oder 10 mm beträgt der Spitze-Tal-Wert ST des gewellten flexiblen Leiterbandes 32 in einem Basisprofil 1 vorzugsweise zwischen 1 mm und 6 mm, bevorzugt zwischen 2 und 6 mm. Mit anderen Worten beträgt zwischen zwei Verbindungsstellen zwischen Basisprofil 1 und flexiblem Leiterband 32 der maximale Abstand des flexiblen Leiterbandes 32 vom Basisprofil 1 bzw. ggf. von der Verbindungsschicht bevorzugt mindestens 1 mm und höchstens 6 mm, bevorzugt zwischen 2 und 6 mm.

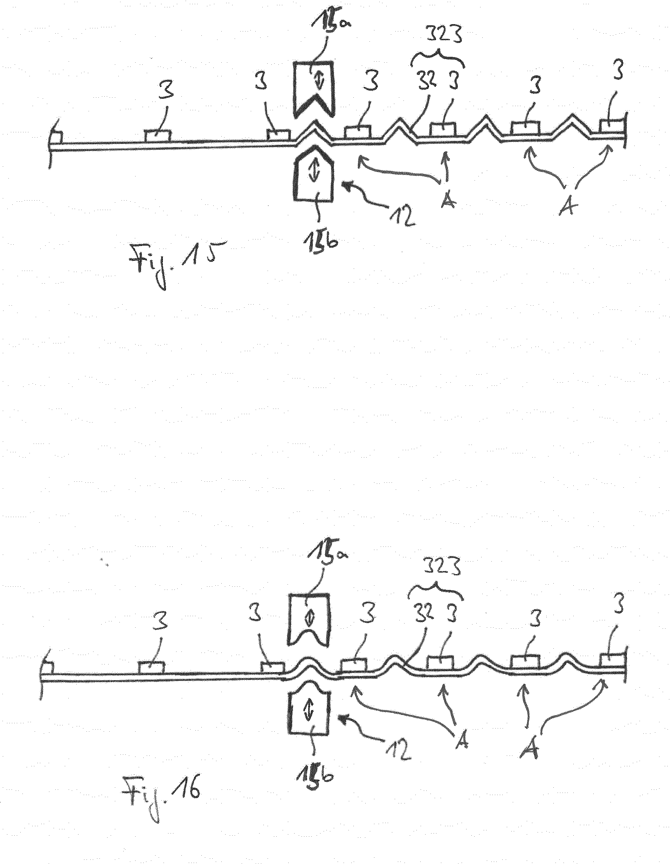

Geeignete Verfahren zum Durchführen eines solchen Knick- oder Faltprozesses bzw. zum Herstellen von entsprechend gewellten LED-Streifen 323 sind in den Figuren 14 bis 17 schematisch dargestellt. Dabei werden in das flexible Leiterband 32 eines LED-Streifens 323 beispielsweise jeweils zwischen zwei einander benachbarten LED-Chips 3 mittels einer zwei Prägeteile 12a und 12b aufweisenden Pressvorrichtung 12 vorbestimmte Wölbungen gebogen, welche dann insgesamt zu einer oben prinzipiell beschriebenen gewellten Form des LED-Streifens 323 und den damit verbunden Vorteilen für die oben beschriebenen LED-Bänder 5 führt. Die Wölbungen können auch nur alle zwei, drei, vier oder mehr LED-Chips 3 oder auch in unregelmäßigen Abständen angeordnet sein. Ebenso können je nach Bedarf zwischen zwei LED-Chips 3 mehrere derartige Wölbungen angeordnet werden.

Die Ausgestaltung eines LED-Streifens 323 mit gewelltem flexiblem Leiterband 32 stellt unabhängig von den übrigen Merkmalen der hier beschriebenen Verfahren und LED-Bänder eine eigenständige Erfindung dar. Derartige LED-Streifen 323 können mit Vorteil auch in anderweitigen Anordnungen verwendet werden.

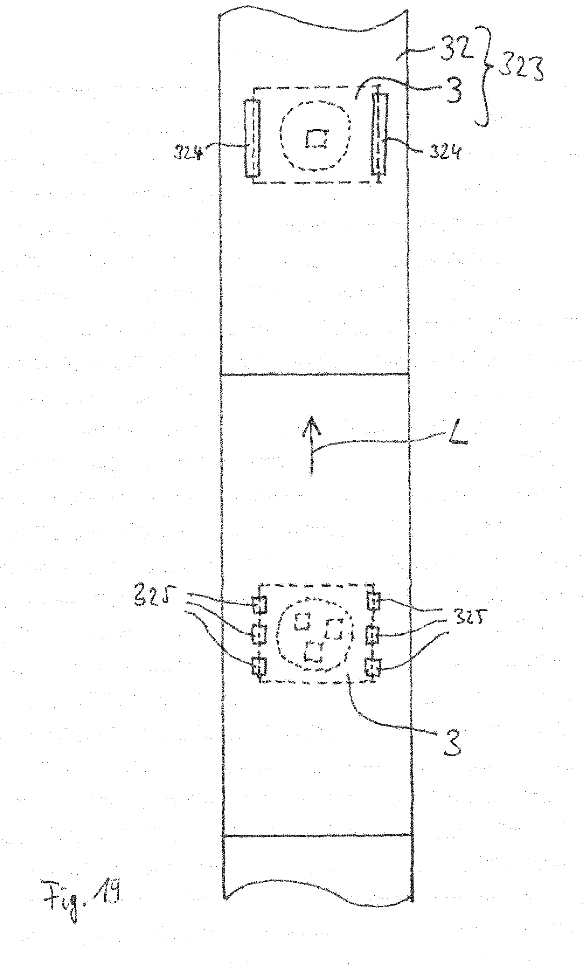

Insbesondere in Verbindung mit einem wie oben beschrieben gewellten flexiblen Leiterband 32 sind bei einer Ausführungsform eines LED-Streifens 323 die Seiten der LED-Chips 3, an denen deren elektrischen Anschlüsse aus diesen herausgeführt und verlötet werden, den Längsseiten des flexiblen Leiterbandes 32 zugewandt. Für die LED-Chips 3 vorgesehene streifenförmige Lötpads 324 des flexiblen Leiterbandes 32 verlaufen entlang dessen Längsseiten. Bei einer Mehrzahl von auf einer Seite eines LED-Chips 3 angeordneten elektrischen Anschlüssen, wie es zum Beispiel bei einer Multi-LED mit einem PLCC6-Gehäuse der Fall ist, liegen demnach die zugeordneten Lötpads 325 des flexiblen Leiterbandes 32 jeweils in einer Reihe entlang dessen Längsseiten. Diese Anordnung der Lötpads 324 bzw. 325 ist in Figur 19 schematisch veranschaulicht.

Eine solche längsseitige Anordnung der Lötstellen der LED-Chips 3 erhöht die Widerstandsfähigkeit des LED-Streifens 323 bei Torsionsbelastung. Bei Torsion löst sich ein herkömmlich "quer gelöteter" LED-Chip, bei dem ein langgestreckter Lötpad oder eine Mehrzahl von auf einer Seite eine LED-Chips angeordneten Lötpads quer zur Längsrichtung des Leiterbandes verläuft bzw. nebeneinander angeordnet sind, wesentlich leichter als ein wie oben beschrieben in Längsrichtung gelöteter LED-Chip.

Besonders bevorzugte Anwendungsbereiche für die oben erläuterten LED-Bänder stellen der Automotive-Bereich, hier insbesondere der Nutzfahrzeug- bzw. LKW-Bereich, und der Architektur-Bereich dar.

Im Automotive-Bereich eignen sich die LED-Bänder ganz besonders für Anhänger- oder Container-Innen- wie auch Außenbeleuchtung. Leuchten bzw. Leuchtbänder aus oder mit den oben erläuterten LED-Bändern können in der geforderten IP Schutzklasse mit wesentlich geringerem Aufwand in einem Anhänger- bzw. Container integriert werden. Anstelle herkömmlicher Spot Beleuchtung kann ein oben beschriebenes LED-Band oder eine Leuchte mit einem derartigen LED-Band zum Beispiel in den oberen Kanten des Anhängers durch beispielsweise im Basisprofil integrierte Montagehilfen mit individuell gewählter Geometrie installiert werden. Eine nachträgliche Montage (Nachrüstung) ist auf technisch einfache Weise auch möglich. Ebenso können LED-Bänder gemäß der oben angeführten Lösung oder Leuchten mit solchen LED-Bändern (Leuchtbänder) in der geforderten IP Schutzklasse mit vergleichsweise geringem technischen Aufwand außen und/oder innen an Anhänger bzw. Container integriert werden und auch im Boots- und Schiffsbau verwendet werden.

Im Bereich der Gebäude-Außen- und -Innenbeleuchtung können LED-Bänder gemäß der oben angeführten Lösung mit Vorteil verwendet werden. Insbesondere im Basisprofil integrierte Montagehilfen können die Montage an Gebäuden erheblich vereinfachen.

Bei allen Arten der Gaming Industrie wie Spielautomaten, Spiel Cabinets, Wett Terminals usw. können mit vorliegend beschriebenen LED-Bänder wesentliche Vorteile generiert werden, wie beispielsweise:
- Design-Freiheit (Kurven, Endlos ...) insbesondere durch die Substitution der heute gängigen starren PCB Platinen mit "gewellten" flexiblen Leiterbändern
- Einfache Montage durch integrierte Befestigungssysteme
- Geometrie-Freiheit welche einfach durch die Profil-Extrusion realisiert werden kann
- Kostenreduktion

Die vorliegend beschriebenen Verfahren und das jeweilige LED-Band sind selbstverständlich nicht auf die Ausführungsbeispiele bzw. auf die darin erläuterten Merkmalskombinationen eingeschränkt. Die Erfindung ist allein von den Ansprüchen definiert.

### Bezugszeichenliste

1 Basisprofil
2 Vergussmasse
3 LED-Chip
4 Härte- bzw. Trockenofen
5 LED-Band
6 funktionelle Folie
7 Abdeckprofil
8 Fügevorrichtung
9 Linsenteil
10 Reflektorteil
11 Rolle
12 rückseitige Wand
13, 14 seitliche Wand
15 Pressvorrichtung
15a, 15b Prägeteil
21 Grund-Verguss
22 Deck-Verguss
23 Düse
32 flexibles Leiterband
33 Rolle
55 Rolle
66 Rolle
77 Rolle
323 LED-Streifen
324, 325 Lötpad
A Auflagezone
L Längsrichtung
M Montagefläche
ST Spitze-Tal-Wert

## Patentansprüche

1. Leuchtdiodenstreifen (323) zur Verwendung in einem flexiblen Leuchtdiodenband (5), mit einem flexiblen Leiterband (32), auf dem eine Vielzahl von Leuchtdioden-Chips (3) angeordnet und untereinander elektrisch verschaltet sind, wobei der LED-Streifen (323) entlang einer Längsrichtung (L) bezüglich einer Montagefläche (M) für den Leuchtdiodenstreifen (323) zwischen lokalen Hochpunkten und lokalen Tiefpunkten wellig alternierend ausgebildet ist, **dadurch gekennzeichnet, dass** die Welligkeit des flexiblen LED-Streifens (323) mittels Knicken oder Falten des flexiblen Leiterbandes (32) senkrecht zu dessen Haupterstreckungsfläche und quer zu dessen Längsrichtung (L) in vorgegebenen Abständen jeweils zwischen zwei LED-Chips (3) oder Gruppen von LED-Chips (3) hergestellt ist.

2. Leuchtdiodenstreifen (323) gemäß Anspruch 1, **dadurch gekennzeichnet, dass** das flexible Leiterband (32) entlang seiner Längsrichtung (L) nicht durchgängig auf der dafür vorgesehenen Montagefläche (M) bzw. auf einer darauf aufgebrachten Verbindungsschicht aufliegt und über dieser wellig verläuft, derart, dass das flexible Leiterband (32) jeweils zwischen zwei Auflagezonen (A) des flexiblen Leiterbandes (32) auf der Montagefläche (M) bzw. Verbindungsschicht eine vorgegebene Wölbung weg von der Montagefläche (M) bzw. Verbindungsschicht aufweist und dort von dieser beabstandet ist.

3. Leuchtdiodenstreifen (323) gemäß Anspruch 1 oder 2, **dadurch gekennzeichnet, dass** die LED-Chips (3) jeweils über der Auflagezone (A) oder benachbart zu der Auflagezone (A) angeordnet sind.

4. Leuchtdiodenstreifen (323) nach einem der vorangehenden Ansprüche, **gekennzeichnet durch** streifenförmige Lötpads (324) für die LED-Chips (3) oder Gruppen mehrerer Lötpads (325) für die LED-Chips (3), wobei die Lötpads (324, 325) entlang einer Längsrichtung (L) des Leuchtdiodenstreifens (323) verlaufen bzw. aufgereiht sind.

5. Leuchtdiodenband (5) mit einem Leuchtdiodenstreifen (323) gemäß einem der Patentansprüche 1 bis 4, **dadurch gekennzeichnet, dass** der Leuchtdiodenstreifen (323) in einem aufrollbar elastischen extrudierten Basisprofil (1) aufgenommen ist und das Leiterband (32) als ein mit Leuchtdioden (LED)-Chips (3) bestücktes flexibles Leiterband (Flex-PCB) (32) ausgebildet ist und mit einer Vergussmasse (2) und/oder einem aufrollbaren, Abdeckprofil (7) abgedeckt ist.

6. Leuchtdiodenband (5) nach Anspruch 5, **dadurch gekennzeichnet, dass** die SHORE-Härten des Materials des Basisprofils (1) und des Materials der Vergussmasse (2) und/oder des Abdeckprofils (7) aneinander angeglichen sind.

7. Leuchtdiodenband (5) nach Anspruch 6, **dadurch gekennzeichnet, dass** die SHORE-Härten zwischen 20 und 40 shore D bei einer Temperatur von 23°C liegen.

8. Leuchtdiodenband (5) nach Anspruch 6, **dadurch gekennzeichnet, dass** die SHORE-Härten zwischen 20 und 25 shore D bei einer Temperatur von 23°C liegen.

9. Leuchtdiodenband (5) nach einem der Ansprüche 5 bis 8, **dadurch gekennzeichnet, dass** das elastische Basisprofil (1) aliphatisches oder aromatisches Polyurethan (PU) aufweist.

10. Leuchtdiodenband (5) nach einem der Ansprüche 5 bis 8, **dadurch gekennzeichnet, dass** das elastische Basisprofil (1) thermoplastisches Elastomer (TPE)-Material (beispielsweise Thermoplastisches Elastomer auf Urethanbasis (TPU)) aufweist.

11. Leuchtdiodenband (5) nach einem der Ansprüche 5 bis 8, **dadurch gekennzeichnet, dass** das elastische Basisprofil (1) PVC-Material, insbesondere Weich-PVC-Material, oder ein anderes elastisches Thermoplast-Material oder ein elastisches Duroplast-Material aufweist.

12. Leuchtdiodenband (5) nach einem der Ansprüche 5 bis 11, **dadurch gekennzeichnet, dass** die Vergussmasse (2) aus mindestens einem PU-Material hergestellt ist.

13. Leuchtdiodenband (5) nach einem der Ansprüche 5 bis 12, **dadurch gekennzeichnet, dass** über den LED-Chips ein transparenter, insbesondere glasklarer Verguss (21) angeordnet ist, der mit einer transluzenten Deckschicht (22) überdeckt ist.

14. Leuchtdiodenband (5) nach einem der Ansprüche 5 bis 13, **dadurch gekennzeichnet, dass** der LED-Streifen (323) separat versiegelt ist.

15. Leuchtdiodenband (5) nach einem der Ansprüche 5 bis 14, **dadurch gekennzeichnet, dass** es auf eine Rolle aufgewickelt ist.

16. Leuchtdiodenband (5) nach einem der Ansprüche 5 bis 14, **dadurch gekennzeichnet, dass** das elastische Basisprofil (1) mittels Coextrusion hergestellt ist und nur eine rückseitige Wand (12) des Basisprofils (1) mit mindestens einem gut wärmeleitenden Additiv versehen ist.

17. Verfahren zum Herstellen eines Leuchtdiodenbandes (5) gemäß einem der Ansprüche 5 bis 16, **gekennzeichnet durch** folgende Verfahrensschritte:
- Herstellen eines elastischen Basisprofils (1) mittels Profil-Extrusion und Aufrollen des elastischen Basisprofils (1) auf eine erste Rolle (11);
- Herstellen eines LED-Streifens (323), welcher ein mit Leuchtdioden (LED)-Chips (3) bestücktes flexibles Leiterband (Flex-PCB) (32) umfasst, wobei das Herstellen des LED-Streifens (323) das wellig alternierende Ausbilden des Leiterbandes (32) entlang seiner Längsrichtung (L) bezüglich einer Montagefläche (M) für den Leuchtdiodenstreifen (323) zwischen lokalen Hochpunkten und lokalen Tiefpunkten umfasst, **gekennzeichnet durch** Herstellen der Welligkeit des flexiblen LED-Streifens (323) mittels Knicken oder Falten des flexiblen Leiterbandes (32) senkrecht zu dessen Haupterstreckungsfläche und quer zu dessen Längsrichtung (L) in vorgegebenen Abständen jeweils zwischen zwei LED-Chips (3) oder Gruppen von LED-Chips (3), und Aufrollen des LED-Streifens (323) auf eine zweite Rolle (33);
- Abrollen des Basisprofils (1) von der ersten Rolle (11);
- Abrollen des LED-Streifens (323) von der zweiten Rolle (33) und Einführen des LED-Streifens (323) in das Basisprofil (1) und
- Abdecken des LED-Streifens (323) im Basisprofil (1) mittels einer Vergussmasse (2) und/oder mittels eines Abdeckprofils (7).

18. Verfahren nach Anspruch 17, **dadurch gekennzeichnet, dass** die SHORE-Härten des Materials des Basisprofils (1) und des Materials der Vergussmasse (2) und/oder des Abdeckprofils (7) aneinander angeglichen sind.

19. Verfahren nach Anspruch 18, **dadurch gekennzeichnet, dass** die SHORE-Härten zwischen 20 und 40 shore D bei einer Temperatur von 23°C liegen.

20. Verfahren nach Anspruch 19, **dadurch gekennzeichnet, dass** die SHORE-Härten zwischen 20 und 25 shore D bei einer Temperatur von 23°C liegen.

21. Verfahren nach einem der Ansprüche 17 bis 20, **dadurch gekennzeichnet, dass** das elastische Basisprofil (1) im Wesentlichen aus aliphatischem oder aromatischem Polyurethan (PU) hergestellt wird.

22. Verfahren nach einem der Ansprüche 17 bis 20, **dadurch gekennzeichnet, dass** das elastische Basisprofil (1) im Wesentlichen aus thermoplastischem Elastomer (TPE)-Material (beispielsweise Thermoplastisches Elastomer auf Urethanbasis (TPU)) hergestellt wird.

23. Verfahren nach einem der Ansprüche 17 bis 20, **dadurch gekennzeichnet, dass** das elastische Basisprofil (1) im Wesentlichen aus PVC-Material, insbesondere Weich-PVC-Material, oder im Wesentlichen aus einem anderen elastischen Thermoplast-Material oder im Wesentlichen aus einem elastischen Duroplast-Material hergestellt wird.

24. Verfahren nach einem der Ansprüche 17 bis 23, **dadurch gekennzeichnet, dass**, insbesondere zur Verbesserung der Haftung der Vergussmasse (2), auf dem Basisprofil (1), mittels eines Corona-, eines Plasma-, eines chemischen und/oder eines mechanischen Verfahrens eine Oberflächenbeschaffenheit des Materials des Basisprofils (1), insbesondere dessen Oberflächenspannung, modifiziert wird.

25. Verfahren nach einem der Ansprüche 17 bis 24, **dadurch gekennzeichnet, dass** die Vergussmasse (2) zumindest teilweise mindestens ein PU-Material aufweist.

26. Verfahren nach einem der Ansprüche 17 bis 25, **dadurch gekennzeichnet, dass** der LED-Streifen (323) vor dem Einführen in das Basisprofil (1) versiegelt wird.

27. Verfahren nach einem der Ansprüche 17 bis 26, **dadurch gekennzeichnet, dass** das mit dem LED-Streifen (323) und der Vergussmasse (2) und/oder dem Abdeckprofil (7) versehene Basisprofil (1) in einem Härte- bzw. Trockenofen (4) behandelt wird und das fertiggestellte Leuchtdiodenband (5) nachfolgend in vorgegebene Längen konfektioniert oder auf eine dritte Rolle (5) aufgerollt wird.

## Claims

1. Light-emitting diode strip (323) for use in a flexible light-emitting diode tape (5), comprising a flexible conductor tape (32) on which a plurality of light-emitting diode chips (3) are disposed and electrically inter-connected, wherein the LED strip (323) is designed so that it alternates in a corrugated manner between local high points and local low points along a longitudinal direction (L) with respect to a mounting surface (M) for the light-emitting diode strip (323), **characterised in that** the corrugation of the flexible LED strip (323) is produced by bending or folding the flexible conductor tape (32) perpendicularly to the main extent thereof and transverse to the longitudinal direction (L) thereof at predefined intervals between each two LED chips (3) or groups of LED chips (3).

2. Light-emitting diode strip (323) according to claim 1, **characterised in that** the flexible conductor tape (32) along its longitudinal direction (L) does not bear continuously on the mounting surface (M) provided therefor or on a connecting layer applied thereon and extends over the latter in a corrugated manner such that the flexible conductor tape (32) has a predefined curvature away from the mounting surface (M) or connecting layer and is spaced apart from the latter between in each case two bearing zones (A) of the flexible conductor tape (32) on the mounting surface (M) or connecting layer.

3. Light-emitting diode strip (323) according to claim 1 or 2, **characterised in that** the LED chips (3) are arranged in each case above the bearing zone (A) or adjacent to the bearing zone (A).

4. Light-emitting diode strip (323) according to one of the preceding claims, **characterised by** strip-shaped solder pads (324) for the LED chips (3) or groups of a plurality of solder pads (325) for the LED chips (3), wherein the solder pads (324, 325) extend or are arranged in a row along a longitudinal direction (L) of the light-emitting diode strip (323) .

5. Light-emitting diode tape (5) comprising a light-emitting diode strip (323) according to one of claims 1 to 4, **characterised in that** the light-emitting diode strip (323) is received in a rollable elastic extruded base profile (1) and the conductor tape (32) is designed as a flexible conductor tape (flexible PCB) (32) equipped with light-emitting diode (LED) chips (3) and is covered with a potting compound (2) and/or a rollable cover profile (7).

6. Light-emitting diode tape (5) according to claim 5, **characterised in that** the SHORE hardnesses of the material of the base profile (1) and of the material of the potting compound (2) and/or of the cover profile (7) are matched to one another.

7. Light-emitting diode tape (5) according to claim 6, **characterised in that** the SHORE hardnesses are between 20 and 40 SHORE D at a temperature of 23°C.

8. Light-emitting diode tape (5) according to claim 6, **characterised in that** the SHORE hardnesses are between 20 and 25 SHORE D at a temperature of 23°C.

9. Light-emitting diode tape (5) according to one of claims 5 to 8, **characterised in that** the elastic base profile (1) comprises aliphatic or aromatic polyurethane (PU).

10. Light-emitting diode tape (5) according to one of claims 5 to 8, **characterised in that** the elastic base profile (1) comprises thermoplastic elastomer (TPE) material (for example, urethane-based thermoplastic elastomer (TPU)).

11. Light-emitting diode tape (5) according to one of claims 5 to 8, **characterised in that** the elastic base profile (1) comprises PVC material, in particular soft PVC material, or another elastic thermoplastic material or an elastic thermoset material.

12. Light-emitting diode tape (5) according to one of claims 5 to 11, **characterised in that** the potting compound (2) is produced from at least one PU material.

13. Light-emitting diode tape (5) according to one of claims 5 to 12, **characterised in that** a transparent, in particular crystal-clear potting material (21) covered with a translucent top layer (22) is disposed above the LED chips.

14. Light-emitting diode tape (5) according to one of claims 5 to 13, **characterised in that** the LED strip (323) is sealed separately.

15. Light-emitting diode tape (5) according to one of claims 5 to 14, **characterised in that** it is wound up onto a reel.

16. Light-emitting diode tape (5) according to one of claims 5 to 14, **characterised in that** the elastic base profile (1) is produced by co-extrusion and only one rear wall (12) of the base profile (1) is provided with at least one additive with good heat-conducting capacity.

17. Method for producing a light-emitting diode tape (5) according to one of claims 5 to 16, **characterised by** the following method steps:
- producing an elastic base profile (1) by means of profile extrusion and rolling up the elastic base profile (1) onto a first reel (11);
- producing an LED strip (323) comprising a flexible conductor tape (flexible PCB) equipped with light-emitting diode (LED) chips (3), wherein producing the LED strip (323) involves designing the conductor tape (32) so that it alternates in a corrugated manner between local high points and local low points along its longitudinal direction (L) with respect to a mounting surface (M) for the light-emitting diode strip (323), **characterised by** producing the corrugation of the flexible LED strip (323) by bending or folding the flexible conductor tape (32) perpendicularly to the main extent thereof and transverse to the longitudinal direction (L) thereof at predefined intervals between each two LED chips (3) or groups of LED chips (3), and rolling up the LED strip (323) onto a second reel (33);
- unrolling the base profile (1) from the first reel (11);
- unrolling the LED strip (323) from the second reel (33) and inserting the LED strip (323) into the base profile (1), and
- covering the LED strip (323) in the base profile (1) with a potting compound (2) and/or with a cover profile (7).

18. Method according to claim 17, **characterised in that** the SHORE hardnesses of the material of the base profile (1) and of the material of the potting compound (2) and/or of the cover profile (7) are matched to one another.

19. Method according to claim 18, **characterised in that** the SHORE hardnesses are between 20 and 40 SHORE D at a temperature of 23°C.

20. Method according to claim 19, **characterised in that** the SHORE hardnesses are between 20 and 25 SHORE D at a temperature of 23°C.

21. Method according to one of claims 17 to 20, **characterised in that** the elastic base profile (1) is produced substantially from aliphatic or aromatic polyurethane (PU).

22. Method according to one of claims 17 to 20, **characterised in that** the elastic base profile (1) is produced substantially from thermoplastic elastomer (TPE) material (for example, urethane-based thermoplastic elastomer (TPU)).

23. Method according to one of claims 17 to 20, **characterised in that** the elastic base profile (1) is produced substantially from PVC material, in particular soft PVC material, or substantially from another elastic thermoplastic material or substantially from an elastic thermoset material.

24. Method according to one of claims 17 to 23, **characterised in that** in particular in order to improve the adhesion of the potting compound (2) to the base profile (1), a surface property of the material of the base profile (1), in particular the surface tension thereof, is modified by means of a corona, plasma, chemical and/or mechanical method.

25. Method according to one of claims 17 to 24, **characterised in that** the potting compound (2) at least partially comprises at least one PU material.

26. Method according to one of claims 17 to 25, **characterised in that** the LED strip (323) is sealed prior to insertion into the base profile (1).

27. Method according to one of claims 17 to 26, **characterised in that** the base profile (1) provided with the LED strip (323) and the potting compound (2) and/or the cover profile (7) is treated in a curing or drying furnace (4) and the finished light-emitting diode tape (5) is subsequently cut into predefined lengths or rolled up onto a third reel (5).

## Revendications

1. Ruban de diodes électroluminescentes (323) destiné à être utilisé dans une bande de diodes électroluminescentes flexible (5), comportant une bande conductrice flexible (32) sur laquelle sont agencées plusieurs puces de diodes électroluminescentes (3) et connectées électriquement entre elles, le ruban de LED (323) étant conçu de façon à onduler en alternance entre des points hauts locaux et des points bas locaux le long d'une direction longitudinale (L) par rapport à une surface de montage (M) pour le ruban de diodes électroluminescentes (323), **caractérisé en ce que** l'ondulation du ruban de diodes électroluminescentes (323) flexible est fabriquée par courbure ou par pliure de la bande conductrice flexible (32) dans le sens perpendiculaire par rapport à sa surface d'étirement principale et dans le sens transversal par rapport à sa direction longitudinale (L) à des intervalles prédéfinis respectivement entre deux puces de LED (3) ou groupes de puces de LED (3).

2. Ruban de diodes électroluminescentes (323) selon la revendication 1, **caractérisé en ce que** la bande conductrice flexible (32) ne repose pas en continu le long de sa direction longitudinale (L) sur la surface de montage (M) prévue à cet effet ou sur une couche de liaison agencée par-dessus et s'étende au-dessus de celle-ci de façon à onduler, de telle sorte que la bande conductrice flexible (32) présente, respectivement entre deux zones d'appui (A) de la bande conductrice flexible (32) sur la surface de montage (M) ou la couche de liaison, une courbure prédéfinie qui s'éloigne de la surface de montage (M) ou de la couche de liaison et soit à cet endroit espacée de celle-ci.

3. Ruban de diodes électroluminescentes (323) selon la revendication 1 ou 2, **caractérisé en ce que** les puces de LED (3) sont agencées respectivement au-dessus de la zone d'appui (A) ou à proximité de la zone d'appui (A).

4. Ruban de diodes électroluminescentes (323) selon l'une des revendications précédentes, **caractérisé par** des pastilles de soudure (324) en forme de ruban pour les puces de LED (3) ou des groupes de plusieurs pastilles de soudure (325) pour les puces de LED (3), les pastilles de soudure (324, 325) s'étendant ou étant alignées le long d'une direction longitudinale (L) du ruban de diodes électroluminescentes (323).

5. Bande de diodes électroluminescentes (5) comportant un ruban de diodes électroluminescentes (323) selon l'une des revendications 1 à 4, **caractérisée en ce que** le ruban de diodes électroluminescentes (323) est logé dans un profilé de base (1) extrudé élastique enroulable et la bande conductrice (32) est conçue sous la forme d'une bande conductrice flexible (Flex-PCB) (32) équipée de puces de diodes électroluminescentes (LED) (3) et recouverte d'une matière d'enrobage (2) et/ou d'un profilé de recouvrement (7) enroulable.

6. Bande de diodes électroluminescentes (5) selon la revendication 5, **caractérisée en ce que** les duretés SHORE du matériau du profilé de base (1) et du matériau de la matière d'enrobage (2) et/ou du profilé de recouvrement (7) sont adaptées l'une à l'autre.

7. Bande de diodes électroluminescentes (5) selon la revendication 6, **caractérisée en ce que** les duretés SHORE sont comprises entre 20 et 40 Shore D à une température de 23 °C.

8. Bande de diodes électroluminescentes (5) selon la revendication 6, **caractérisée en ce que** les duretés SHORE sont comprises entre 20 et 25 Shore D à une température de 23 °C.

9. Bande de diodes électroluminescentes (5) selon l'une des revendications 5 à 8, **caractérisée en ce que** le profilé de base élastique (1) présente du polyuréthane (PU) aliphatique ou aromatique.

10. Bande de diodes électroluminescentes (5) selon l'une des revendications 5 à 8, **caractérisée en ce que** le profilé de base élastique (1) présente un matériau élastomère thermoplastique (TPE)(par exemple, un élastomère thermoplastique à base d'uréthane (TPU)).

11. Bande de diodes électroluminescentes (5) selon l'une des revendications 5 à 8, **caractérisée en ce que** le profilé de base élastique (1) présente un matériau PVC, en particulier un matériau PVC souple, ou un autre matériau thermoplastique élastique ou un matériau plastique thermodurcissable élastique.

12. Bande de diodes électroluminescentes (5) selon l'une des revendications 5 à 11, **caractérisée en ce que** la matière d'enrobage (2) est fabriquée à partir d'au moins un matériau PU.

13. Bande de diodes électroluminescentes (5) selon l'une des revendications 5 à 12, **caractérisée en ce qu'**un enrobage (21) transparent, en particulier clair, qui est recouvert d'une couche de finition translucide (22), est agencé au-dessus des puces de LED.

14. Bande de diodes électroluminescentes (5) selon l'une des revendications 5 à 13, **caractérisée en ce que** le ruban de LED (323) est scellé séparément.

15. Bande de diodes électroluminescentes (5) selon l'une des revendications 5 à 14, **caractérisée en ce qu'**elle est enroulée sur un rouleau.

16. Bande de diodes électroluminescentes (5) selon l'une des revendications 5 à 14, **caractérisée en ce que** le profilé de base élastique (1) est fabriqué par coextrusion et que seule une paroi arrière (12) du profilé de base (1) est pourvue d'au moins un additif à bonne conductivité thermique.

17. Procédé de fabrication d'une bande de diodes électroluminescentes (5) selon l'une des revendications 5 à 16, **caractérisé par** les étapes de procédé suivantes :
- Fabrication d'un profilé de base élastique (1) par extrusion de profilé et enroulement du profilé de base élastique (1) sur un premier rouleau (11) ;
- Fabrication d'un ruban de LED (323), lequel comprend une bande conductrice flexible (Flex-PCB) (32) garnie de puces de diodes électroluminescentes (LED) (3), la fabrication du ruban de LED (323) comprenant la conception de la bande conductrice (32) en alternance de façon à onduler le long de sa direction longitudinale (L) par rapport à une surface de montage (M) pour le ruban de diodes électroluminescentes (323) entre des points hauts locaux et des points bas locaux, **caractérisée par** la réalisation de l'ondulation du ruban de diodes électroluminescentes (323) flexible par courbure ou pliure de la bande conductrice flexible (32) dans le sens perpendiculaire par rapport à sa surface d'étirement principale et dans le sens transversal par rapport à sa direction longitudinale (L) à des intervalles prédéfinis respectivement entre deux puces de LED (3) ou groupes de puces de LED (3), et l'enroulement du ruban de LED (323) sur un deuxième rouleau (33) ;
- Déroulement du profilé de base (1) du premier rouleau (11) ;
- Déroulement du ruban de LED (323) du deuxième rouleau (33) et insertion du ruban de LED (323) dans le profilé de base (1) et
- Recouvrement du ruban de LED (323) dans le profilé de base (1) au moyen d'une matière d'enrobage (2) et/ou d'un profilé de recouvrement (7).

18. Procédé selon la revendication 17, **caractérisé en ce que** les duretés SHORE du matériau du profilé de base (1) et du matériau de la matière d'enrobage (2) et/ou du profilé de recouvrement (7) sont adaptées l'une à l'autre.

19. Procédé selon la revendication 18, **caractérisé en ce que** les duretés SHORE sont comprises entre 20 et 40 Shore D à une température de 23 °C.

20. Procédé selon la revendication 19, **caractérisé en ce que** les duretés SHORE sont comprises entre 20 et 25 Shore D à une température de 23 °C.

21. Procédé selon l'une des revendications 17 à 20, **caractérisé en ce que** le profilé de base élastique (1) est essentiellement fabriqué à partir de polyuréthane (PU) aliphatique ou aromatique.

22. Procédé selon l'une des revendications 17 à 20, **caractérisé en ce que** le profilé de base élastique (1) est essentiellement fabriqué à partir d'un matériau élastomère thermoplastique (TPE)(par exemple, un élastomère thermoplastique à base d'uréthane (TPU)).

23. Procédé selon l'une des revendications 17 à 20, **caractérisé en ce que** le profilé de base élastique (1) est essentiellement fabriqué à partir d'un matériau PVC, en particulier un matériau PVC souple, ou essentiellement à partir d'un autre matériau thermoplastique élastique ou un matériau plastique thermodurcissable élastique.

24. Procédé selon l'une des revendications 17 à 23, **caractérisé en ce que**, en particulier à des fins d'amélioration de l'adhérence de la matière d'enrobage (2) sur le profilé de base (1), une finition de surface du matériau du profilé de base (1), en particulier sa tension de surface, est modifiée au moyen d'un traitement corona, d'un traitement au plasma, d'un procédé chimique et/ou d'un procédé mécanique.

25. Procédé selon l'une des revendications 17 à 24, **caractérisé en ce que** la matière d'enrobage (2) présente tout du moins en partie au moins un matériau PU.

26. Procédé selon l'une des revendications 17 à 25, **caractérisé en ce que** le ruban de LED (323) est scellé avant l'insertion dans le profilé de base (1).

27. Procédé selon l'une des revendications 17 à 26, **caractérisé en ce que** le profilé de base (1) garni du ruban de LED (232) et de la matière d'enrobage (2) et/ou du profilé de recouvrement (7) est traité dans une étuve de polymérisation ou de dessiccation (4) et la bande de diodes électroluminescentes (5) finie est ensuite confectionnée dans des longueurs prédéfinies et enroulée sur un troisième rouleau (5).
